# EUROPEAN PATENT APPLICATION

(11) **EP 1 898 623 A2**
(43) Date of publication of application: **12.03.2008**
(21) Application number: 07110848.4
(22) Date of filing: 22.06.2007
(51) Int. Cl.: H04N 1/00

(54) **Apparatus and method for detecting pixel misalignment**

(30) Priority: 07.09.2006 KR 20060086333
(71) Applicant: Samsung Electronics Co., Ltd., Suwon-si, Gyeonggi-Do (KR)
(72) Inventor: Kim, Yang-hoe, Gyeonggi-do (KR); Jung, Sung-june, Gyeonggi-do (KR)
(74) Representative: Clark, Charles Robert

(57) **Abstract**

An apparatus to detect misalignment of pixels of an image in an image forming apparatus, and a method thereof. The misalignment detecting apparatus can include a light source to emit light, a lensed fiber to focus the emitted light from the light source on a printing medium bearing a test pattern, and to receive a reflected light from the printing medium; and a light detector to detect a light received at the lensed fiber and to read the test pattern. A focusing area as small as several *µm* can be provided.

## Description

The present general inventive concept relates to an apparatus to detect misalignment of pixels of an image of an image forming apparatus and a method thereof. More particularly, the present general inventive concept relates to an apparatus to detect misalignment of pixels and a method thereof suitable for, but not limited to, high-resolution printing.

An image forming apparatus such as a printer is required to detect errors such as misalignment or malfunction of nozzles of the printhead, in order to achieve a desirable image quality. Optical detection is generally used to detect the nozzle misalignment or malfunction.

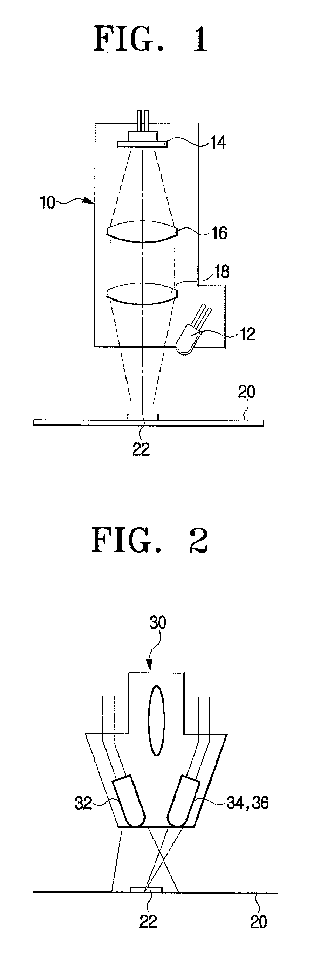

Figure 1 is a schematic view of a conventional optical sensing apparatus.

Referring to Figure 1, the optical sensing apparatus 10 may include one light source 12, one optical detector 14, and a pair of lenses 16and 18. The operations of the optical sensing apparatus 10 mainly include printing a test pattern 22 onto a printing medium 20 for the detection of pixel misalignment, emission of light from the light source 12 and reflection thereof against the printing medium 20, and the transmission of the reflected light through the lenses 16 and18 for entry into the optical detector 14.

The optical detector 14 then detects intervals between the pixels of the test pattern 22 according to the scanning operation to detect misalignment. Thus, the misalignment of the pixels is detected based on the detected intervals between the pixels.

Figure 2 is a schematic view of another conventional light detecting apparatus.

Referring to Figure 2, the optical sensing apparatus 30 includes one light source 32, one light detector 34, and one focusing element 36. The light detector 34 and the focusing element 36 are encapsulated together as illustrated.

Operations of the optical sensing apparatus 30 are briefly explained below.

As the test pattern 22 is printed onto printing medium 20, a widely dispersed light from the light source 32 is emitted onto the printing medium 20. At this time, only the light impinging on (and reflected at) the focusing area of the focusing element 36 enters the light detector 34. After that, intervals between the pixels are detected according to the scanning operation, and the pixel misalignment is detected based on the detected pixel intervals.

In the optical sensing apparatus 10 as illustrated in Figure 1, the focusing area of the lenses 16 and 18 has to be decreased, as the intervals between pixels decrease (that is, as the printing resolution is increased to high dpi). As the printing resolution is increased, it is necessary to decrease the focusing area of the lenses in order to be able to detect misalignment of pixels that are separated by shorter distances between them. However, a very small focusing area of lenses 16 and 18 is difficult to achieve.

While an expensive optical system may address the problems associated with achieving a very small focusing area, there is another problem in that the focal length between the lenses 16 and 18 and the printing medium 20 has to be maintained constant. This too is difficult to achieve because the focal length error increases as the focusing area decreases. As a result, stability deteriorates.

Additionally, referring to Figure 1, because only the light irradiated from the light source 12, reflected from the printing medium 20 at the focusing area enters the light detector 14, the system is inefficient and loses most of the emitted light. Accordingly, the amount of light entering the light detector 14 is insufficient to construct an adequately sensitive and stable optical sensing system.

Also, the optical sensing apparatus 30 of Figure 2 has almost the same structure, except for the use of focusing element 36 instead of the lenses 16 and 18. Thus no particular improvement is obtained by using the system of Figure 2 over the system of Figure 1.

The present general inventive concept aims to provide an apparatus for detecting misalignment of pixels in an image forming apparatus and a method thereof. The invention is particularly relevant to, but not limited to, high resolution printing.

The foregoing and/or other aspects of the present general inventive concept can be substantially realized by providing an apparatus to detect misalignment of pixels of an image of an image forming apparatus, the apparatus including a light source to emit light, a lensed fiber or waveguide to focus the emitted light from the light source onto a printing medium bearing a test pattern, and to receive a reflected light from the printing medium, and a light detector to detect the reflected light received at the lensed fiber and to read or detect the test pattern.

A light splitter may be further provided to guide the emitted light from the light source toward the printing medium, and to guide the reflected light received at the lensed fiber toward the optical detector. The lensed fiber may be integrally formed on one end of the light splitter.

The light splitter may be formed by coupling a pair of optical fibers at a center portion (or center part thereof). Alternatively, the light splitter may be formed by coupling a pair of optical fibers with each other from one end to a center portion (or center part thereof).

The light splitter may include an input part connected to the light source, and an input/output part connected to the lensed fiber to direct emitted light received at the input part to the lensed fiber, and to receive reflected light received at the lensed fiber, and an output part connected to the light detector to output the reflected light received at the lensed fiber to the light detector.

The light detector may detect intervals between pixels of the test pattern, using a time point based on variation of the level of the reflected light received at the lensed fiber, for example.

The foregoing and/or other aspects of the present general inventive concept may be achieved by providing a method of detecting misalignment of pixels of an image of an image forming apparatus which includes a light source, a lensed fiber and a light detector, the method including emitting light from the light source, focusing, through the lensed fiber, the emitted light onto a printing medium bearing a test pattern, receiving, through the lensed fiber, reflected light from the printing medium, and reading the test pattern by detecting the received reflected light at the light detector.

Reading the test pattern may include detecting intervals of pixels in the test pattern using a time point based on variation of the level of the reflected light received.

The foregoing and/or other aspects of the present invention general inventive concept may be achieved by providing an apparatus to detect misalignment of pixels of a test pattern of an image forming device, the apparatus including a light source, a lensed fiber coupled to the light source, and a light detector coupled to the lensed fiber to determine whether misalignment of the pixels of the test pattern is present based on captured reflection of emitted light from the light source focused on the test pattern by the lensed fiber.

The apparatus can further include a light splitter coupled between the light source and the lensed fiber and further coupled between the lensed fiber and the light detector, where the light source emits light to the lensed fiber via the light splitter, where the lensed fiber focuses the emitted light onto the test pattern, and where the lensed fiber transmits the captured reflection to the light detector via the light splitter.

The light splitter can be coupled to the light source via an input part. Furthermore, the light splitter can be coupled to the lensed fiber via an input/output part. Still further, the light splitter can be coupled to the light detector via an output part.

The light splitter can have at least two optical fibers that are joined at a center part of the light splitter.

The optical fibers can be fused or interweaved at the center part of the light splitter.

The lensed fiber can focus the emitted light of the light source onto the test pattern in a focusing area of a dot size corresponding to a resolution of greater than or equal to twice the highest resolution of the test pattern.

The focusing area of the lensed fiber can be from about 1µm to about 10 µm, from about 2µm to about 5µm, from about 2µm to about 4µm, from about 2µm to about 3µm, or about 2µm.

The light detector can determine a distance interval corresponding to a separation between the pixels of the test pattern and can compare the distance interval to that of a stored corresponding test pattern to determine whether misalignment is present.

The distance interval between the pixels can represent a separation between adjacent or selected pixels or between adjacent or selected groups of pixels.

The test pattern can be printed by an image forming device.

The light detector can determine a time interval corresponding to a separation between the pixels of the test pattern and can compare the time interval to that of a stored corresponding test pattern to determine whether misalignment is present.

The time interval can correlate to a separation between adjacent or selected pixels or between adjacent or selected groups of pixels.

The foregoing and/or other aspects of the present invention general inventive concept may be achieved by providing an apparatus to detect misalignment of pixels of a test pattern of an image forming device, the apparatus including a light source to emit light, a lensed fiber coupled to the light source to focus the emitted light onto the test pattern and to capture reflected light from the test pattern, and a light detector coupled to the lensed fiber to read the test pattern and to determine whether misalignment of the pixels of the test pattern is present according to the reflected light.

The light splitter can have a first end, a second end and a third end, where the light source is coupled to the first end, where the light detector is coupled to the second end, and where the lensed fiber is coupled to the third end. The light splitter can have a fourth end for coupling to another lensed fiber.

The foregoing and/or other aspects and utilities of the present invention general inventive concept may be achieved by providing an apparatus to bidirectionally transmit information to analyze alignment of pixels of a test pattern of an image of an image forming device, the apparatus including a light splitter in either a T shaped, a Y shaped or an X shaped configuration, a lensed fiber coupled to the light splitterto focus emitted light onto the test pattern and to capture reflected light from the test pattern, and a light detector coupled to the light splitter to read the test pattern and to analyze alignment of the pixels of the test pattern according to the reflected light.

Embodiments of the present invention are now described, by way of example and with reference to the accompanying drawings of which:
Figure 1 is a schematic view of a conventional optical sensing apparatus;
Figure 2 is a schematic view of another example of a conventional optical sensing apparatus;
Figure 3 is a schematic view of an apparatus to detect misalignment of pixels according to an exemplary embodiment of the present general inventive concept;
Figures 4A and 4B illustrate a light splitter of Figure 3;
Figures 5A and 5B illustrate a lensed fiber of Figure 3;
Figures 6A and 6B illustrate the relation of test pattern size and focusing;
Figures 7A and 7B are views provided to explain pixel interval detection of the light detector of Figure 3; and
Figure 8 is a flowchart illustrating a method of detecting misalignment of pixels according to an exemplary embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

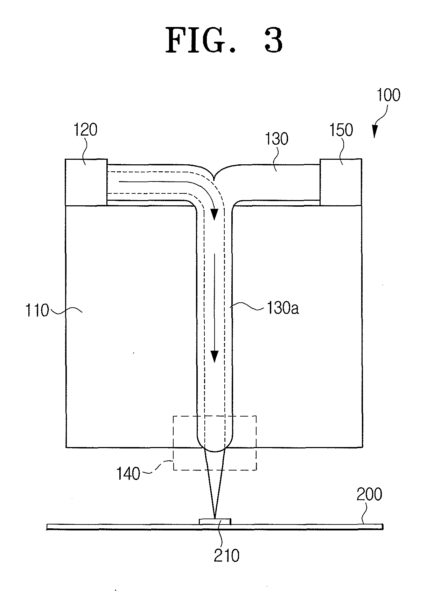

Figure 3 is a schematic view of an apparatus to detect misalignment of pixels according to an exemplary embodiment of the present general inventive concept.

Referring to Figure 3, the pixel misalignment detecting apparatus 100 may include a housing 110, a light source 120, a light splitter 130, a lensed fiber 140 and a light detector 150.

The light source 120 can emit light onto a printing medium 200 bearing a test pattern 210, and may be a light emitting diode (LED). The test pattern 210 can be a pre-stored printing pattern to be used to detect the intervals between the pixels thereof.

The light source 120 is connected to a first end of the light splitter 130 used to guide the light from the light source 120 toward the printing medium 200. The light detector 150 is connected to a second end of the light splitter 130 which is also used to guide the reflected light from the printing medium 200 toward the light detector 150. A third end of the light splitter 130 is connected to the lensed fiber 140 used to transmit emitted light onto a test pattern 210 on the printing medium 200 and used to receive reflected light from the test pattern 210. As illustrated, the light splitter 130 may be supported by the housing 110, and can have a substantially 'T' shaped configuration.

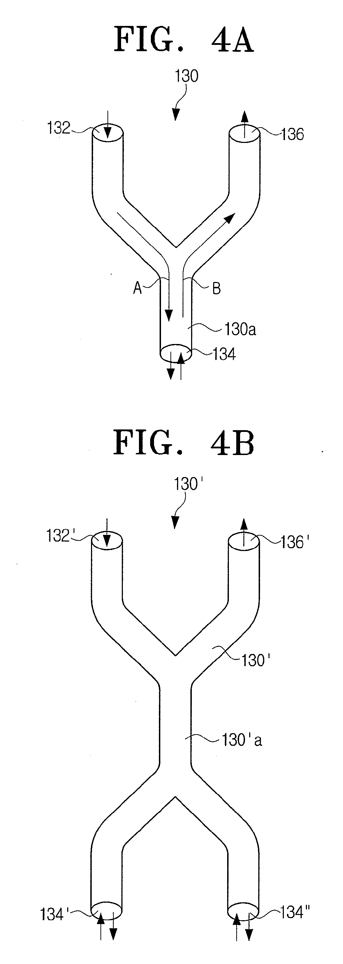

The light splitter 130 may include an input part (not expressly numbered in FIGURE 3) connected to the light source 120, an input/output part (not expressly numbered in Figure 3) connected to the lensed fiber 140, and an output part (not expressly numbered in Figure 3) connected to the light detector 150. The light splitter 130 will be explained in greater detail below with reference to Figures 4A and 4B.

The lensed fiber 140 can focus the emitted light from the light source 120 onto the printing medium 200 bearing the test pattern 210, and can receive the reflected light from the printing medium 200 bearing the test pattern 210.

The lensed fiber 140 can have the structure such that a lens is provided at one end of an optical fiber. The lensed fiber 140 may be fabricated contactlessly by using a thermal-diffusion expanded core (TEC) optical fiber and a high-absorptive femto-second laser; that is, a by using a high peak power laser beam which is strongly absorbed by the fiber material.

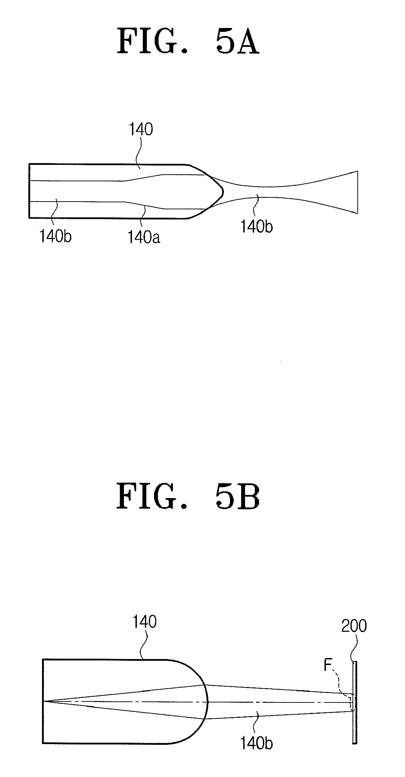

The lensed fiber 140 can be connected to the light splitter 130 or alternatively, the lensed fiber 140 may be integrated with the light splitter 130. The lensed fiber 140 will be explained in greater detail below with reference to Figures 5A and 5B.

The light detector 150 can detect the reflected light received through the lensed fiber 140, and thereby can read the test pattern 210 printed on the printing medium 200. A light signal (or other equivalent or other corresponding signal, for example) with varying light levels (or levels correlated to a variation in light levels corresponding to detected pixels or detected groups of pixels of the test pattern, for example) is directed and input into the light detector 150. The signal is correlated to whether or not one more pixels of (or one or more groups of pixels of) the test pattern 210 is/are present or absent. Depending on whether or not one or more pixels of the test pattern 210 (printed on the printing medium 200) is/are present or absent, misalignment can be determined as further explained herein below.

The light detector 150 can detect the intervals between the pixels based on the time point correlated to when the signal level of the light varies. The signal level is used to detect the pixel intervals between pixels of the test pattern, which is generally known to those of skill in the art. Thus, the same will not be explained in more than sufficient detail needed to be understood by those of skill in the art, for the sake of brevity.

Figures 4A and 4B illustrate the light splitter 130 of Figure 3, according to one or more embodiments of the present general inventive concept.

While the light splitter 130 with the 'T' shaped configuration is illustrated in Figure 3, the light splitters 130and 130' in FIGURES 4A and 4B ,respectively, are illustrated with alternative configurations which are applicable to the misalignment detecting apparatus 100 illustrated in Figure 3.

More specifically, Figure 4A illustrates the light splitter 130 in a 'Y' shaped configuration. A major difference between the Y type light splitter 130 in Figure 4A and the T type light splitter 130 in Figure 3 is the difference between the Y versus T shaped configurations. However, both light splitters 130 of Figure 3 and Figure 4A have the same light paths.

Referring to Figure 4A, the light splitter 130 may include an input part 132, an input/output part 134, and an output part 136 which constitute parts of the light transmission path.

The input part 132 can include a hole formed on a first top end of the pair of top ends of the Y, or at the corresponding top end of a T type light splitter 130, and the hole can be connected to the light source 120 such that emitted light from the light source 120 can be input through the hole. The emitted light received through the hole can then be directed toward the input/output part 134, for example.

The input/output part 134 can include a hole formed on a bottom end of the Y, or at the corresponding bottom end of the T type light splitter 130 which can be connected to the lensed fiber 140 such that the emitted light received at the input part 132 is directed/guided (e.g., in the direction of arrow A) out of input/output part 134 to the lensed fiber 140, and the reflected light received at the lensed fiber 140 is transmitted in an opposing direction (e.g., in the direction of arrow B) into the input/output part 134. The reflected light can then be further directed/guided, also in the direction of arrow B, to the output part 136.

The output part 136 can include a hole formed on a second top end of the pair of top ends of the Y, or at the corresponding top end of the T type light splitter 130, and can be connected to the light detector 150 such that the reflected light received via the lensed fiber 140 and via the input/output part 134 can then be output out of output part 136 to the light detector 150, for example.

The emitted light from the light source 120 can be input at the input part 132. The emitted light input at the input part 132 can be guided in the direction of arrow A by the light splitter 130, and can be output at the input/output part 134 to the lensed fiber 140.

Thereafter, the emitted light can be transmitted through the lensed fiber 140, and can be focused on the printing medium 200 bearing the test pattern, for example. If the light is reflected from the printing medium 200, the lensed fiber 140 can receive the reflected light. The received reflected light can be input at the input/output part 134, guided in the direction of arrow B by the light splitter 130, and output at the output part 136 to the light detector 150, for example. Thus, the emitted light transmitted via the input part 132, via the central part 130a, and then via the input/output part 134 can be focused by the lensed fiber 140 onto a test pattern 210, and the focused emitted light can be reflected back from the test pattern 210 and captured by the lensed fiber 140 and transmitted via the input/output part 134, via the central part 130a and then via the output part 136 to the light detector 150, for example.

It is to be understood that the emitted light from the light source 120 and the reflected light from the printing medium 200 have different advancing (or opposing propagating) directions, but both move along the same path. Even so, there is no loss (or substantially no loss) of the light travelling in opposing directions along the same path because the emitted light from the light source 120 and the reflected light from the printing medium 200 have sufficiently different phases and do not interfere or interact (or do not substantially interfere or interact) with each other.

Figure 4B illustrates another example of a light splitter that can be used as an optical coupler. The light splitter 130' can include a pair of optical fibers which are connected at the center part 130'a. The optical coupler may engage two light sources (not illustrated), or may separate one emitted light source beam into two beams (e.g., one split beam to exit via 134' and the other split beam to exit via 134"), for example.

The light splitter 130' exemplified in Figure 4B includes an input part 132' connected to the light source 120 (not illustrated in Figure 4B), two input/output parts 134'and 134" connected to the lensed fiber 140 (not illustrated in Figure 4B), and an output part 136' connected to the light detector 150 (not illustrated in Figure 4B).

Referring to Figures 4A and 4B, the light splitters 130 and 130' may be formed in a variety of configurations. The light splitters 130 and 130' may be formed by interweaving a pair of optical fibers from one end to a desired point, such as by interweaving from one end to the center part 130'a. Alternatively, the pair of optical fibers may be thermally fused to each other (or interweaved) at the center part 130a and 130'a.

For example, figures 3 and 4A illustrate a light splitter 130 which can be provided by interweaving a pair of optical fibers from one end to the center part 130a, and Figure 4B illustrates a light splitter 130 which can be provided by interweaving a pair of optical fibers at the center part 130'a. Among these, the light splitter 130 as exemplified in Figures 3 and 4A may be preferable for use in the misalignment detecting apparatus 100 according to exemplary embodiments of the present general inventive concept.

Figures 5A and 5B illustrate a lensed fiber 140 of Figure 3, according to one or more embodiments of the present general inventive concept.

As explained above, the lensed fiber 140 can include or can be a lens fabricated by polishing a TEC optical fiber, and may be formed in a contactless manner using a femto-second laser.

Figure 5A illustrates the propagation of a light beam 140b passing through the lensed fiber 140 and focused on, for example, the test pattern 210 (not shown in Figure 5A) as explained above.

Referring to Figure 5A, a light beam 140b can form a beam waist 140a by propagation through the lensed fiber 140. The light can be focused on the printing medium 200 by using the focusing characteristics of the lensed fiber 140. This is illustrated in Figure 5B, for example.

Although it varies depending on the optical fiber types, the thickness of the fiber core can be sized to several *µm.* Therefore, by focusing the light 140b using the lensed fiber 140 (which can be fabricated by polishing the optical fiber), a very small focusing area F can be formed on printing medium 200 compared to that of using an average lens instead of the lensed fiber 140.

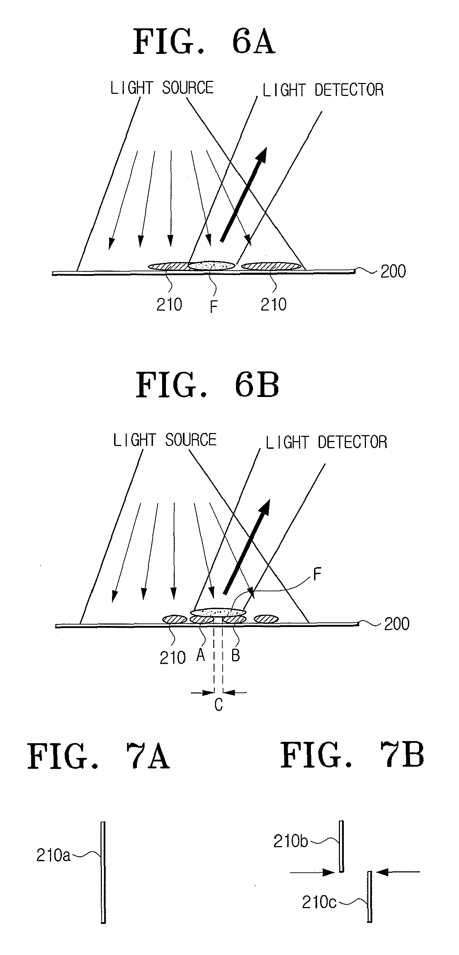

Figures 6A and 6B illustrate the relation between the test pattern size and the focusing area, according to one or more embodiments of the present general inventive concept.

Figure 6A illustrates an example where the size of the test pattern 210 (or possibly the size of the separation of pixels of the test pattern 210) is larger than the focusing area F. In other words, the pixels of the test pattern are separated by a distance greater than the width of the area viewed by the light detector. Referring to Figure 6A, misalignment between the pixels can be accurately detected only when the size of the test pattern 210 (or possibly the distance separating the pixels of the test pattern 210) is larger than the size or width of the focusing area F. In other words, because the smallest distance a lens can detect is limited by the size of its focal area F, if the focusing area F is larger than the test pattern 210 (or possibly larger than the size of the separation of pixels of the test pattern 210), then the focusing area F is not small enough to be able to distinguish (e.g., to adequately focus) between one or more pixels (e.g., or groups of pixels) of the test pattern 210 having a separation smaller than the size the focusing area F. In such case, where the focusing area F is too large, pixels (e.g., or groups of pixels) of the test pattern area 210 may be "detected" or "read" as a single pixel (or a single unseparated group of pixels) rather then being correctly detected as separated pixels (e.g., or as separated groups of pixels) of the test pattern 210, for example.

Figure 6B illustrates an example where the size of the test pattern 210 (or possibly the size of the separation of one or more pixels or separation of one or more groups of pixels of the test pattern 210) is smaller than the focusing area F. Referring to Figure 6B, two test patterns 210 (or pixels thereof), which have relatively smaller size, are placed within one focusing area F. Therefore, misalignment of one or more pixels (e.g., or of one or more groups of pixels such as A and B) cannot be detected accurately, for example. So, for example, because separation C between A and B is smaller than the focal area F and/or because A or B itself is smaller than the focal area F, the focal area F is too large to be able to distinguish A from B, as illustrated in Figure 6B.

In other words, the misalignment detecting apparatus 100 has to be constructed such that the focusing area F (as exemplified in Figure 6A) is smaller than the size of the test pattern 210 to be able to detect misalignment of one or more pixels (or of one or more groups of pixels) of the test pattern 210. The focusing area F can be designed (e.g., using the lensed fiber 140) to provide spatial resolution which is at least one-half of the test pattern pixel dpi. Thus, for example, if the test pattern has a resolution of 10 dpi, then it may be desirable to have a focusing area F of a size sufficient to provide a spatial resolution of at least about 20 dpi (e.g., focusing area dpi resolution ≥ test pattern pixel dpi resolution x 2), according to an embodiment of the present general inventive concept. Thus, if the test pattern has a print resolution of 10 dpi, then the focusing area F should be of a size corresponding to a dot of a size of at least about 20dpi or of a smaller size corresponding to a dot size of a higher dpi resolution.

Therefore, when the emitted light is focused using the lensed fiber 140 (which can be fabricated by polishing an optical fiber) having a core (not numbered per se in Figures 3, 5A or 5B) which is several *µm* in thickness, the focusing area F can be maintained (or designed) to be smaller than the size of test pattern 210 (or possibly smaller than the size of the separation of pixels of the test pattern 210) as illustrated in Figure 6A, for example. Thus, the lensed fiber may have a core having a thickness on the order of from about 1µm to about 10µm (e.g., 1µm, 2µm, 3µm, 4µm, 5µm, 6µm, 7µm, 8µm, 9µm, or10 µm), from about 2µm to about 5µm, from about 2µm to about 4µm, from about 2µm to about 3µm, or about 2µm to produce a focal area F of the same corresponding diameter as the thickness of the core, for example.

Detecting intervals between the pixels (or groups of pixels) by the light detector 150 of Figure 3 will be explained below with reference to the illustration of Figures 7A and 7B, according to one or more embodiments of the present general inventive concept.

If the emitted light received at the lensed fiber 140 is output through the input/output part 134 and the reflected light is output through the output part 136, the light detector 150 can read a test pattern 210 based on the received reflected light. Accordingly, the light detector 150 can detect the energy of the reflected light transmitted through the light splitter 130, and can determine the presence or absence of the pixels (or of groups of pixels) of the test pattern 210 according to the detected energy. This information can be used to determine if misalignment of the pixels is present (or absent).

Figure 7A illustrates an example of good pixel alignment in the test pattern 210 printed on the printing medium 200, and Figure 7B illustrates misalignment of the pixels in the test pattern 210.

The light detector 150 may read the test pattern 210 (e.g., 210a, 210b and 210c) as illustrated in Figures 7A and 7B based on the received reflected light, and can detect the interval or intervals between the pixels (or between groups of pixels) of the test pattern 210, for example. Accordingly, the light detector 150 can determine whether there is misalignment of pixels (or of groups of pixels). So, for example, if the test pattern 210a of Figure 7A is read/detected, then misalignment is not present (at the corresponding reading location of the test pattern 210), and if the test pattern 210b with 210c of Figure 7B is read/detected, then misalignment is present (at the corresponding reading location of the test pattern 210). If after reading the entire test pattern, no test pattern (such as 210b with 210c) is read/detected, then it can be determined that no misalignment is present. Conversely, if test pattern 210b with 210c is read/detected upon reading the entire test pattern, then it can be determined that misalignment is present, for example. Figures 7A and 7B illustrate non-limiting examples of a test pattern (or a portion or portions thereof) with misalignment (Figure 7B) and without misalignment (Figure 7A).

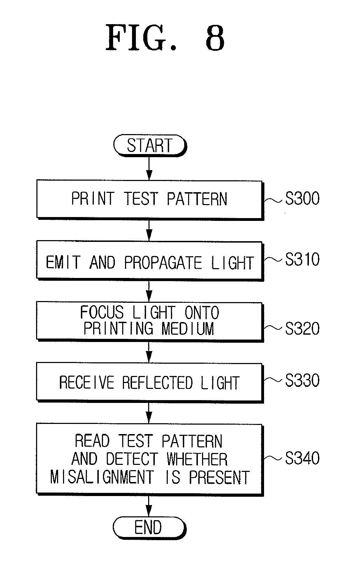

Figure 8 is a flowchart illustrating a method of detecting pixel misalignment according to an exemplary embodiment of the present general inventive concept.

First, a pre-stored test pattern 210 is printed on the printing medium 200 at operation S300.

After the test pattern 210 (or a portion thereof) is printed on the printing medium 200, the light source 120 emits light at operation S310. The emitted light from the light source 120 then passes through the input part 132 of the light splitter 130, advances toward the input/output part 134, and reaches the lensed fiber 140, also in operation S310.

When the emitted light from the light source 120 arrives at the lensed fiber 140, the lensed fiber 140 can focus the light onto the printing medium 200 bearing the test pattern 210 (or a portion thereof) at operation S320. The focusing area F formed by the lensed fiber 140 is designed to be smaller than the test pattern 210 as previously explained, for example.

The emitted light focused by the lensed fiber 140 is aimed onto the test pattern and then reflected back from the printing medium 200, and received at the lensed fiber 140 at operation S330.

When the reflected light is received at the lensed fiber 140, the light is passed through the input/output part 134 of the light splitter 130, advanced toward the output part 136, and directed at the light detector 150. Thus, the light detector 150 detects the intervals between the pixels (e.g., or groups of pixels) based on the received reflected light as explained above, and determines whether misalignment is present at operation S340.

Considering the growing demand for an image forming apparatus with increasingly higher printing resolution, an optical system with several *µm* of focusing area F is also increasingly desired or required especially as higher resolution printing devices are developed. With the misalignment detecting apparatus and method according to exemplary embodiments of the present general inventive concept, the emitted light is focused to form a focusing area F of several *µm,* for example, by using the lensed fiber 140 (which can be provided by polishing the optical fiber). Therefore, misalignment of the pixels can be accurately detected even with high-resolution printing.

Furthermore, because the spatial resolution can be greatly increased by use of the lensed fiber 140, no additional expensive lenses are required. Thus, a more stabilized and compact-sized misalignment detecting apparatus can be provided.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. An apparatus to detect misalignment of pixels of an image formed by an image forming apparatus on a medium, comprising:
a light source arranged to emit light;
a fiber arranged to transmit light emitted by the source to the medium bearing the image and to receive a reflected portion of the light from the image; and
a light detector arranged to detect reflected light from the image transmitted by the fiber.

2. The apparatus of claim 1, further comprising:
a light splitter arranged to guide the light from the light source toward the medium, and to guide the light received at the fiber toward the light detector.

3. The apparatus of claim 2, wherein the fiber is a lensed fiber which is integrally connected to one end of the light splitter.

4. The apparatus of claim 2 or 3, wherein the light splitter comprises a pair of optical fibers coupled at a center part of the light splitter.

5. The apparatus of claim 4, wherein the pair of optical fibers are coupled with each other from one end of an optical fiber to the center part of the light splitter.

6. The apparatus of any of claims 2-5, wherein the light splitter comprises:
an input part connected to the light source;
an input/output part connected to the fiber to output the emitted light received through the input part and to receive a reflected light received through the fiber; and
an output part connected to the light detector to output the reflected light received through the fiber to the light detector.

7. The apparatus of any preceding claim, wherein the image is a test pattern, and wherein the light detector detects one or more intervals between pixels of the test pattern to determine whether misalignment of the test pattern is present, and wherein the one or more intervals is a distance interval or a time interval corresponding to a separation between the pixels, or a combination thereof.

8. The apparatus of any preceding claim, wherein:
the fiber is coupled to the light source; the light detector is coupled to the fiber; and
the light detector determines whether misalignment of the pixels of image is present based on captured reflection of emitted light from the light source focused on the test pattern by the fiber.

9. The apparatus of claim 8, wherein:
the light splitter is coupled between the light source and the fiber and further coupled between the fiber and the light detector;
wherein the light source emits light to the fiber via the light splitter;
wherein the fiber is a lensed fiber and focuses the emitted light onto the test pattern, and
wherein the fiber transmits the captured reflection to the light detector via the light splitter.

10. The apparatus of claim 9, wherein the light splitter is coupled to the light source via an input part,
wherein the light splitter is coupled to the lensed fiber via an input/output part, and
wherein the light splitter is coupled to the light detector via an output part.

11. The apparatus of claim 10, wherein the light splitter comprises at least two optical fibers that are joined at a center part of the light splitter.

12. The apparatus of claim 10, wherein the at least two optical fibers are fused or interweaved at the center part of the light splitter.

13. The apparatus of claim 9, wherein the lensed fiber has a focusing area of a dot size corresponding to a resolution of greater than or equal to twice the highest resolution of the test pattern.

14. The apparatus of claim 9, wherein the light detector determines a distance interval corresponding to a separation between the pixels of the test pattern and compares the distance interval to that of a stored corresponding test pattern to determine whether misalignment is present.

15. The apparatus of claim 14, wherein the distance interval between the pixels represents a separation between adjacent or selected pixels or between adjacent or selected groups of pixels.

16. The apparatus of claim 1, wherein the image is a test pattern printed by the image forming device.

17. The apparatus of claim 9, wherein the light detector determines a time interval corresponding to a separation between the pixels of the image and compares the time interval to that of a stored corresponding image to determine whether misalignment is present.

18. The apparatus of claim 17, wherein the time interval correlates to a separation between adjacent or selected pixels or between adjacent or selected groups of pixels.

19. The apparatus of claim 17, wherein the test pattern is printed by the image forming device.

20. The apparatus of claim 13, wherein the focusing area is from about 1µm to about 10µm, from about 2µm to about 5µm, from about 2µm to about 4µm, from about 2µm to about 3µm, or about 2µm in diameter.

21. The apparatus of claim 1, wherein the light splitter has either a T shaped, a Y shaped or an X shaped configuration;

22. The apparatus of claim 1, further comprising:
a light splitter wherein the light splitter, the light source, the fiber and the light detector are connected to guide the emitted light from the light source toward the printing medium bearing the test pattern, and to guide the reflected light received at the fiber to the light detector.

23. A method of detecting misalignment of pixels of a test pattern of an image forming apparatus, the method comprising:
transmitting light from a light source through a fiber onto a medium bearing the test pattern;
receiving, through the fiber, light reflected from the medium bearing the test pattern; and
detecting the test pattern by detecting the received light at a light detector.

24. The method of claim 23, wherein the reading the test pattern comprises detecting one or more intervals of pixels in the test pattern, and wherein the one or more intervals is a distance interval, or a time interval corresponding to a separation between the pixels or a combination thereof.
